# EUROPEAN PATENT SPECIFICATION

(11) **EP 0 643 859 B1**
(45) Date of publication and mention of the grant of the patent: **24.07.1996**
(21) Application number: 93910494.9
(22) Date of filing: 08.04.1993
(51) Int. Cl.: G07G 1/14, A47F 10/02

(54) **SELF-SERVICE PAYMENT COUNTER**
SELBSTBEDIENUNGSZAHLTHEKE
COMPTOIR D'ENCAISSEMENT EN LIBRE SERVICE

(30) Priority: 02.06.1992 SE 9201703
(43) Date of publication of application: 22.03.1995
(73) Proprietor: TRINICS AB, S-431 53 Mölndal (SE)
(72) Inventor: WESTERLUND, Lennart, S-430 33 Fjäras (SE)
(74) Representative: Kristiansen, Alf P.
(86) International application number: SE9300310
(87) International publication number: WO9324908

(56) References cited:
- WO-A-90/13873
- WO-A-91/10962
- DE-A- 4 005 105
- SE-B- 464 944
- US-A- 4 964 053

## Description

### SELF-SERVICE PAYMENT COUNTER.

### Technical field:

The present invention relates to a self service payment counter of the kind that is used in grocery stores and the like where the customer himself places his articles on a conveyor belt which passes a cashier who receives payment for the articles and where the customer himself collects his articles and removes them from the counter after payment.

### Prior art:

Payment counters of different kinds are earlier known. They are mainly based on the principle that a conveyor moves the articles past a cashier who registers the value of each article in a cash register after which the articles are collected in an area from where the customer can pack them into bags. To facilitate the work of the cashier, the majority of the articles are provided with a code which makes it possible for the cashier to merely let the code on the article pass a detector which, by means of a computer, registers the price of the article. For articles which have not been registered by means of a code, the cashier has to register the price manually by means of a key board.

More recently check out desks have been further developed and i.a. detectors or so called scanners have been arranged at the input side for the articles on the conveyor, which scanners are used by the customer for registering the articles. One or more such detectors are arranged along the track for the articles. The aim with these check out desks is that the articles shall be registered automatically without manual service so that the cashier only has to receive the payment. It has, however, turned out that it is difficult to bring about such a payment counter which works automatically without being too dependent on the readiness of the customer for the registration. An example of such a desk is disclosed in the international patent application No WO 90/13873.

A great number of customers also have difficulties in following given advice and some are also apt to cheat so that an article becomes "free" or is registered as an article having a lower price. To prevent this cheating a cover has some times been arranged above that part of the conveyor on which the article runs.

Desks of prior art are described for instance in WO 91/10962 and US patent 4 964 053. The desks of these patents with the exception of the US-patent are limited to registration of goods marked with a price article code. The desks are provided with systems for preventing errors or cheating by the customer.

### Technical problem:

The main technical problem with the manual payment counters is that it takes a long time to serve a customer. Even if the arrangement as such is reliable the cashier has to handle every article separately and either manually register it in a cash register or move it past a scanner. Besides the fact that this is a time consuming task which often creates queues, this work is also very strenuous and unhealthy for the cashier. She or he has to lift and handle every article and weigh some of them. This can mean that the cashier has to push forward and partly lift several tons of articles every day by hand.

The semi-automatic payment counters mainly have the disadvantage that besides requiring more involvement from the customer, also their function is uncertain. Many articles are difficult to register due to their form or simply due to the fact that they are sold by weight or the like. As mentioned above, they also invite dishonest persons to attempt cheating.

### The solution:

By means of the present invention, one has been able to solve the problems with the above said manual and semi-automatic check out desks and bring about a self service payment counter as set out in claim 1.

According to the invention it is suitable that the payment counter comprises two conveyors, one of which cooperates with the customer's display, scanner, the scale and the keyboard for the customer and a main conveyor cooperating with the sensors.

In accordance with the invention, it is further suitable that the sensors consist of optical emitters and receivers at either side of the conveyor.

The sensors along the conveyor may consist of several sensors for example three which are arranged vertically above each other as units.

It is further suitable that a number of sensor units, for example three, are arranged after each other and at some distance from each other in the running direction of the conveyor.

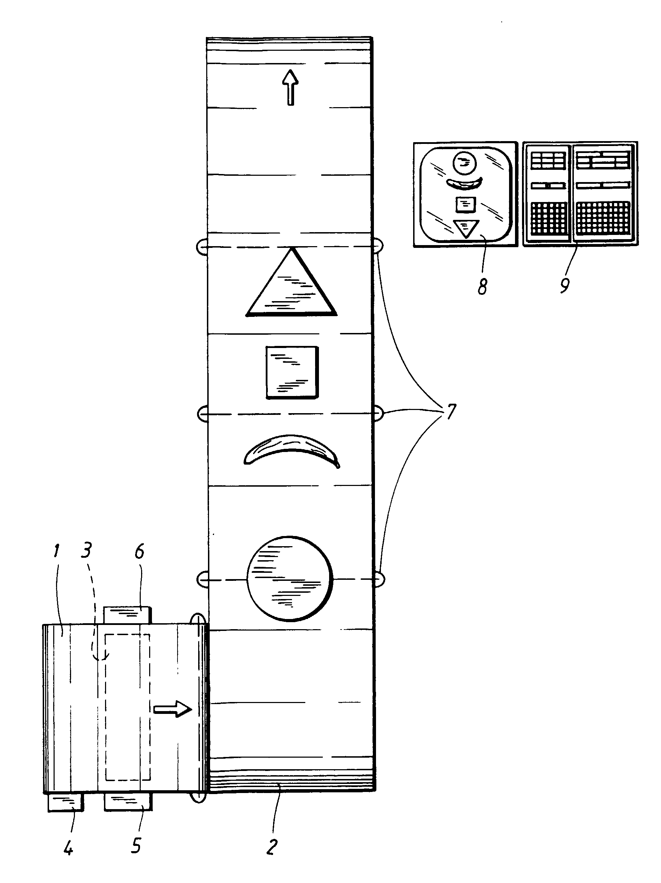

The invention be further described in the following in connection with the figure which schematically shows the principle for a payment counter according to the invention.

### Preferred embodiment:

The self service payment counter according to the figure comprises a conveyor 1 on which the customer places his articles. The conveyor 1 moves in a direction towards a conveyor 2, which has a direction of movement which is turned 90° compared to the movement direction of the conveyor 1. Integrated in the conveyor 1 is a scale 3 which automatically weighs the article which is put on the conveyor and which also effects starting of the conveyor if the conveyor is stationary. At the side of the conveyor a scanner 4 is arranged which can be stationary or manual and which is intended to read the codes on the article which the customer moves past the scanner. Since all articles are not provided with a code, a keyboard 5 is also arranged at the side of the conveyor 1, which keyboard is preferably provided with symbols such as oranges, pears etc. Further, an arrangement at the feeding conveyor 1 consists of a customer display 6 which shows the customer firstly what he/she has to do and secondly what articles he/she has put on the conveyor, the price thereof, etc.

The principle for this feeding conveyor is that if an article is provided with a code and accordingly registered in the computer of the payment counter, the price for this article is registered directly without further work from the operator. If, however, the article consists of, for instance, a bunch of bananas, the customer indicates this by pushing the symbol for bananas on the keyboard 5 and thereafter puts the bananas on the conveyor where the weight is registered, whereafter the computer calculates the price and indicates this.

It can, however, also occur that two articles of the same kind having individual codes are connected, for instance two cans of beer, and when one then registers this kind of article, which is a can and places the two connected cans on the feeding conveyor 1, the weight will tell that there are two pieces having this article indication. The price for this connected article is then registered and the article can proceed further without additional handling. If, instead, a carton comprising for example six cans of beer, which are registered as a unit on the carton, is put on the conveyor, this will proceed as a unit. Should, however, the customer erroneously move the scanner past the code which exists on the separate cans and place the carton on the band, the scale will register that there are six such cans at one time and the correct price will be calculated.

Along the conveyor 2 there are in the present case three units of sensors 7 which indicate the travel of the articles along the conveyor 2. These sensor units 7 can suitably be constructed as three sensors arranged vertically above each other, thus implying in the present case that nine sensors are located along the conveyor 2. The sensors are preferably optical having an emitter and a receiver, whereby the light beam passes across the conveyor. The conveyors function in such a way that they register the forward edge of an article and its rear edge when it passes. It can however happen that some articles let the light beams penetrate through some opening in the article before it has passed, for example a flower pot having three legs. The sensors work therefore with some time delay, which means that a certain time period elapses before it declares that the article has passed. Only when all legs of the flower pot, which are at a short distance from each other, have passed and some time after the last leg has passed, the article is registered as having passed the sensor.

The position of the articles on the conveyor 2 and what articles they are is also shown on the display 8 for the operator. The operator, who usually sits close to the end of the conveyor, therefore has a good view of what is present on the conveyor and what articles they are. It can sometimes happen that an article is not registered by the customer and it will then be given a certain indication as unregistered on the display of the operator when it passes the first sensor. When this article comes to a predetermined position, preferably the last sensor in the direction of movement, the conveyor will automatically be stopped so that the operator can register the article manually before it is moved further.

The operator therefore has a keyboard 9. This can preferably be a double one, i.e. that it can be connected to serve both the self service counter when it is necessary for registering of an unregistered article, and may be connected in another way so that the self service counter can be used as a common manual check out desk. In the drawing the display of the operator and the keyboard is only schematically indicated.

By means of the present invention, an almost totally automatic payment counter is provided wherein the role of the operator is primarily to function as some kind of assistant who helps with the articles and who registers these articles which have not been registered automatically, as well as crates and the like which are transported away from the conveyor. The main part of the work will then be to receive payment for the articles. For the customer this means a quicker service. Besides higher speed being obtained through the non-manual registering of the articles, the advantage also exists that a customer does not have to finish paying before the next customer can put his articles on the conveyor.

It will be obvious that a great gain is obtained for the operator in that he/she does not have to handle the articles by lifting or pushing them, which makes the work much easier.

The invention is not limited to the shown embodiment, but can be varied in different ways within the scope of the claims.

## Claims

1. Self service payment counter comprising at least one conveyor (1, 2) and a computer for controlling the conveyor (-s) (1, 2) and calculating prices and the total sum for registered articles, a scale (3) and, at the input side for the articles, a stationary scanner (4) for the customer and possibly a customer display (6) and, at the outlet side for the articles, a keyboard (9) for registering of possibly unregistered articles by the operator, and sensors (7) along the conveyor (2) for, by means of the computer, being able to stop the conveyor automatically when an unregistered article passes one of the sensors (7) **characterized in** a keyboard (5) preferably having symbols at the input side and the scale (3) being integrated in the conveyor (1) and cooperating via the computer with the scanner (4) or the keyboard (5) at the input side for identifying an article and/or a number thereof, and the sensors (7) along the conveyor (2) being able to inform the display (8) of the operator about the articles and their position on the conveyor (2).

2. Self service payment counter according to claim 1, **characterized in** that it comprises two conveyors (1, 2), one cooperating with the customer's display (6), scanner (4), the scale (3) and the keyboard (5) of the customer, and a main conveyor (2) cooperating with the sensors (7).

3. Self service payment counter according to any of the claims 1 or 2, **characterized in** that the sensors (7) consist of optical emitters and receivers at either side of the conveyor (2).

4. Self service payment counter according to any of the claims 1-3, **characterized in** that a number of sensors, for example three, are arranged vertically above each other as units.

5. Self service payment counter according to any of the claims 1-4, **characterized in** that a number of sensor units (7), for example three, are arranged after each other and at some distance from each other in the movement direction of the conveyor (2).

## Patentansprüche

1. Selbstbedienungs-Zahlschalter mit wenigstens einem Förderband (1, 2) und einem Computer zur Steuerung des bzw. der Förderbänder (1, 2) und zur Berechnung von Preisen sowie der Gesamtsumme für registrierte Artikel, einer Skala (3) und einer stationären Abtasteinrichtung (4) für den Kunden und möglicherweise einer Kundenanzeige (6) an der Eingangsseite für die Artikel sowie einer Tastatur (9) für die Registrierung möglicherweise nicht registrierter Artikel durch eine Bedienungsperson an der Ausgangsseite für die Artikel, und Sensoren (7) entlang des Förderbandes (2), welche mittels des Computers in der Lage sind, das Förderband automatisch zu stoppen, wenn ein nicht registrierter Artikel einen der Sensoren (7) passiert,
gekennzeichnet durch eine Tastatur (5), welche vorzugsweise Symbole an der Eingangsseite aufweist, und dadurch daß die Skala (3) in dem Förderband (1) integriert ist und über den Computer mit der Abtasteinrichtung (4) oder der Tastatur (5) an der Eingangsseite zur Identifizierung eines Artikels und/oder einer Nummer von diesem zusammenarbeitet, und dadurch daß die Sensoren (7) entlang des Förderbandes (2) fähig sind, die Anzeige (8) der Bedienungsperson über die Artikel und deren Lage auf dem Förderband (2) zu informieren.

2. Selbstbedienungs-Zahlschalter nach Anspruch 1,
dadurch gekennzeichnet,
daß er zwei Förderbänder (1, 2) aufweist, wobei eines mit der Kundenanzeige (6), der Abtasteinrichtung (4), der Skala (3) und der Tastatur (5) des Kunden zusammenarbeitet und das Hauptförderband (2) mit den Sensoren (7) zusammenarbeitet.

3. Selbstbedienungs-Zahlschalter nach Anspruch 1 oder 2,
dadurch gekennzeichnet,
daß die Sensoren (7) aus optischen Emittern und Empfängern an beiden Seiten des Förderbandes (2) bestehen.

4. Selbstbedienungs-Zahlschalter nach einem der Ansprüche 1 bis 3,
dadurch gekennzeichnet,
daß eine Anzahl der Sensoren, beispielsweise drei, vertikal übereinander als Einheiten angeordnet sind.

5. Selbstbedienungs-Zahlschalter nach einem der Ansprüche 1 bis 4,
dadurch gekennzeichnet,
daß eine Anzahl der Sensoreinheiten (7), beispielsweise drei, hintereinander und mit etwas Abstand voneinander in der Bewegungsrichtung des Förderbandes (2) angeordnet sind.

## Revendications

1. Comptoir de paiement en libre-service, comprenant au moins un transporteur (1, 2), et un ordinateur destiné à commander le transporteur ou les transporteurs (1, 2) et à calculer des prix et la somme totale des articles enregistrés, une balance (3) et, du côté d'entrée des articles, un lecteur fixe (4) destiné au client, et, éventuellement, un dispositif (6) d'affichage destiné au client et, du côté de sortie des articles, un clavier (9) d'enregistrement par l'opérateur d'articles qui ont pu ne pas être enregistrés, et des capteurs (7) placés le long du transporteur (2) et destinés à arrêter le transporteur automatiquement lorsqu'un article non enregistré passe en face de l'un des capteurs (7), par l'intermédiaire de l'ordinateur,
caractérisé en ce qu'un clavier (5), ayant de préférence des symboles et placé du côté d'entrée, et la balance (3) sont intégrés au transporteur (1) et coopèrent, par l'intermédiaire de l'ordinateur, avec le lecteur (4) ou le clavier (5) placé du côté d'entrée pour l'identification d'un article et/ou du nombre d'articles, et le capteur (7) placé le long du transporteur (2) peut donner à l'affichage (8) à la disposition de l'opérateur des informations sur les articles et leur position sur le transporteur (2).

2. Comptoir de paiement en libre-service selon la revendication 1, caractérisé en ce qu'il comporte deux transporteurs (1, 2), l'un coopérant avec l'affichage (6) destiné au client, le lecteur (4), la balance (3) et le clavier (5) à la disposition du client, et un transporteur principal (2) coopérant avec les capteurs (7).

3. Comptoir de paiement en libre-service selon l'une des revendications 1 et 2, caractérisé en ce que les capteurs (7) comportent des émetteurs et récepteurs optiques placés de part et d'autre du transporteur (2).

4. Comptoir de paiement en libre-service selon l'une des revendications 1 à 3, caractérisé en ce qu'un certain nombre de capteurs, par exemple trois, sont disposés verticalement les uns au-dessus des autres sous forme d'ensembles.

5. Comptoir de paiement en libre-service selon l'une des revendications 1 à 4, caractérisé en ce qu'un certain nombre d'ensembles de capteurs (7), par exemple trois, sont placés les uns après les autres à une certaine distance les uns des autres dans la direction de déplacement du transporteur (2).
